# EUROPEAN PATENT APPLICATION

(11) **EP 4 641 162 A1**
(43) Date of publication of application: **29.10.2025**
(21) Application number: 23906447.0
(22) Date of filing: 17.10.2023
(51) Int. Cl.: G01M 17/007

(54) **TEST-SUBJECT-TESTING SYSTEM, TEST-SUBJECT-TESTING METHOD, AND TEST-SUBJECT-TESTING PROGRAM**

(30) Priority: 19.12.2022 JP 2022202216
(71) Applicant: HORIBA, Ltd., Kyoto-shi Kyoto 601-8510 (JP)
(72) Inventor: KAWAZOE, Hiroshi, Kyoto-shi, Kyoto 601-8510 (JP)
(74) Representative: Müller Hoffmann & Partner
(86) International application number: PCT/JP2023/037562
(87) International publication number: WO 2024/135072

(57) **Abstract**

The present invention is a test-subject-testing system that tests a test subject that is a vehicle or a part thereof while recreating rainfall or snowfall by spraying water droplets according to vehicle velocity of the test subject, the test-subject-testing system includes: a test device on which the test subject is placed or to which the test subject is connected; and a spray unit that sprays water droplets from surroundings of the test subject toward the test subject; and a changing unit that changes spray speed, a position, or an angle of the spray unit according to vehicle velocity of the test subject.

## Description

### Technical Field

The present invention relates to a test-subject-testing system, a test-subject-testing method, and a test-subject-testing program for testing a test subject that is a vehicle or a part thereof.

### Background Art

Conventionally, as disclosed in Patent Literature 1, a vehicle drive testing apparatus including an actual vehicle traveling bench device on which a test target vehicle is mounted and an environment recreation mechanism that recreates an environment around the test target vehicle is considered. Then, a precipitation facility, a fog generation facility, and the like are provided as the environment recreation mechanism. In this vehicle drive testing apparatus, it is possible to perform a test in a rainfall state by recreating a rainfall state in the precipitation facility while causing a test target vehicle to travel on an actual vehicle traveling bench.

### Citation List

### Patent Literature

Patent Literature 1: JP S57-184943 A

### Summary of Invention

### Technical Problem

However, the vehicle drive testing apparatus merely recreates the rainfall state by the precipitation facility, and does not consider the traveling state of a test target vehicle. For example, the speed or angle of rain hitting a windshield changes according to the vehicle velocity of the test target vehicle, but the vehicle drive testing apparatus cannot change the speed or angle of the rain hitting the windshield.

Therefore, the present invention has been made in view of the above-described problems, and a main object thereof is to test a test subject while recreating rainfall or snowfall by spraying water droplets according to the vehicle velocity of the test subject.

### Solution to Problem

That is, a test-subject-testing system according to the present invention is a test-subject-testing system that tests a test subject that is a vehicle or a part thereof, it is preferable that the test-subject-testing system includes: a test device on which the test subject is placed or to which the test subject is connected; a spray unit that sprays water droplets from surroundings of the test subject toward the test subject; and a changing unit that changes spray speed, a position, or an angle of the spray unit according to vehicle velocity of the test subject.

With such a configuration, since the spray speed, the position, or the angle of the spray unit that sprays the water droplets is changed according to the vehicle velocity of the test subject, and the water droplets are sprayed from surroundings of the test subject toward the test subject, it is possible to test the test subject while recreating rainfall or snowfall according to the vehicle velocity of the test subject.

It is preferable that the changing unit covers a predetermined range (a range that affects sensor detection) as a configuration that moves the spray unit in the vertical direction and/or the front-rear direction.

It is preferable that the changing unit covers a predetermined range (a range that affects sensor detection) as a configuration that changes spray speed, a position, or an angle of the spray unit within a range where the water droplets hit the test subject.

It is preferable that the changing unit decreases an angle formed by a spray direction of the spray unit and a vertical direction as fall velocity of the water droplets increases and/or vehicle velocity of the test subject decreases.

For example, in a case where the spray unit disturbs the recognition range of a sensor, it is preferable that the changing unit moves the spray unit in a direction away from the test subject according to the vehicle velocity of the test subject. Since the spray speed decreases when the spray unit is moved away from the test subject, in some cases, it is advantageous to move the spray unit in the vertical direction as long as the recognition range of a sensor is not disturbed.

As a specific embodiment of the spray unit, it is preferable that the spray unit is configured by a two-fluid nozzle.

**In** order to spray the water droplets sprayed from the spray unit toward the test subject, the test-subject-testing system of the present invention may further include a blower unit that blows the water droplets sprayed from the spray unit.

In order to variously change the spray condition of the water droplets to be sprayed to the test subject, as a specific embodiment of the spray unit, it is preferable that the spray unit can adjust the water volume, the water droplet size, or the spray speed.

In order to automatically set the spray unit according to a type of rainfall or snowfall, it is preferable that the test-subject-testing system of the present invention further includes a recording unit that stores a spray condition of the spray unit according to the type of rainfall or snowfall, and the changing unit reads the spray condition from the recording unit according to user's selection, and adjusts spray speed, a position, or an angle of the spray unit.

In addition, in order to automatically set the spray unit according to the type of rainfall or snowfall, it is preferable that the test-subject-testing system of the present invention further includes a spray control unit that reads the spray condition from the recording unit and adjusts the water volume, the water droplet size, or the spray speed of the spray unit according to the user's selection.

As a specific embodiment of the spray unit, it is preferable that the spray unit sprays water droplets toward a windshield of the test subject by changing the spray speed, the position, or the angle by the changing unit.

As a test subject for which the test-subject-testing system of the present invention is suitably used, it is preferable that the test subject is an automatic driving vehicle, a vehicle having an advanced driving support system, or a part thereof, and is provided with a camera or a LiDAR that recognizes a front of a vehicle via a windshield.

During actual traveling, not only water droplets slide down on the windshield or the like, but also other movements are shown by air resistance during traveling. In order to test the test subject while recreating this movement of the water droplets, it is preferable to further include a blower that blows air toward the test subject from the front or the side of the test subject.

As a specific embodiment of the test device, it is preferable that the test device causes the test subject to perform simulation traveling or sets an automatic driving system or an advanced driving support system of the test subject to be in an operation state.

As a specific example of the test device that causes the test subject to perform simulation traveling, it is preferable that the test device includes a rotation body on which a traveling wheel of the test subject is placed, or a rotation body to which an axle, a wheel, or a traveling wheel of the test subject is connected.

**In** order to test the test subject while recreating a splash from the traveling wheel of an own vehicle, it is preferable to include a water supply unit that supplies water to the traveling wheel of the test subject or a simulated rotation body that is disposed around the traveling wheel and simulates the traveling wheel to generate the splash from the traveling wheel or the simulated rotation body.

In addition, a test-subject-testing method according to the present invention is a test-subject-testing method for testing a test subject that is a vehicle or a part thereof, the test-subject-testing method includes: changing spray speed, a position, or an angle of a spray unit that sprays water droplets according to vehicle velocity of the test subject; and testing the test subject by a test device while spraying water droplets from surroundings of the test subject toward the test subject.

Furthermore, a test-subject-testing program according to the present invention is a test-subject-testing program for testing a test subject that is a vehicle or a part thereof, the test-subject-testing program causes a computer to exert a function of changing spray speed, a position, or an angle of a spray unit that sprays water droplets according to vehicle velocity of the test subject, and testing the test subject by a test device while spraying water droplets from surroundings of the test subject toward the test subject.

### Advantageous Effects of Invention

According to the present invention described above, it is possible to test a test subject while recreating rainfall or snowfall by spraying water droplets according to vehicle velocity of the test subject.

### Brief Description of Drawings

FIG. 1 is a schematic diagram illustrating a scenario of a test-subject-testing method using a test-subject-testing system according to an embodiment of the present invention.
FIG. 2 is an example of an overall schematic diagram of the test-subject-testing system according to the embodiment.
FIG. 3 is another example of the overall schematic diagram of the test-subject-testing system according to the embodiment.
FIG. 4 is a schematic diagram illustrating an example of moving a spray unit of the embodiment.
FIG. 5 is a schematic diagram illustrating a configuration including a blower of a modification.
FIG. 6 is a schematic diagram illustrating a configuration of a spray mechanism of the modification.
FIG. 7 is a diagram illustrating a functional configuration of the spray mechanism of the modification.
FIG. 8 is an example of the overall schematic diagram of the test-subject-testing system according to the modification.

### Description of Embodiments

Hereinafter, an embodiment of a test-subject-testing system according to the present invention will be described with reference to the drawings.

Note that, any of the drawings described below is schematically illustrated by being omitted or exaggerated as appropriate for easy understanding. The same components are denoted by the same reference signs, and the description thereof will be omitted as appropriate.

A test-subj ect-testing system 100 of the present embodiment is used to test a test subject W that is, for example, a vehicle (hereinafter, ADAS vehicle) having an advanced driving assistance system (ADAS), an automatic driving vehicle (hereinafter, AD vehicle), or a part thereof. In the present embodiment, a completed vehicle of the ADAS vehicle or the AD vehicle is used as the test subject W. However, the test subject W may be an uncompleted vehicle that is not a completed vehicle (a part of the ADAS vehicle or the AD vehicle) as long as the vehicle can travel, or may be a single sensor (for example, a camera, a millimeter-wave radar, an infrared sensor, a LiDAR, or the like).

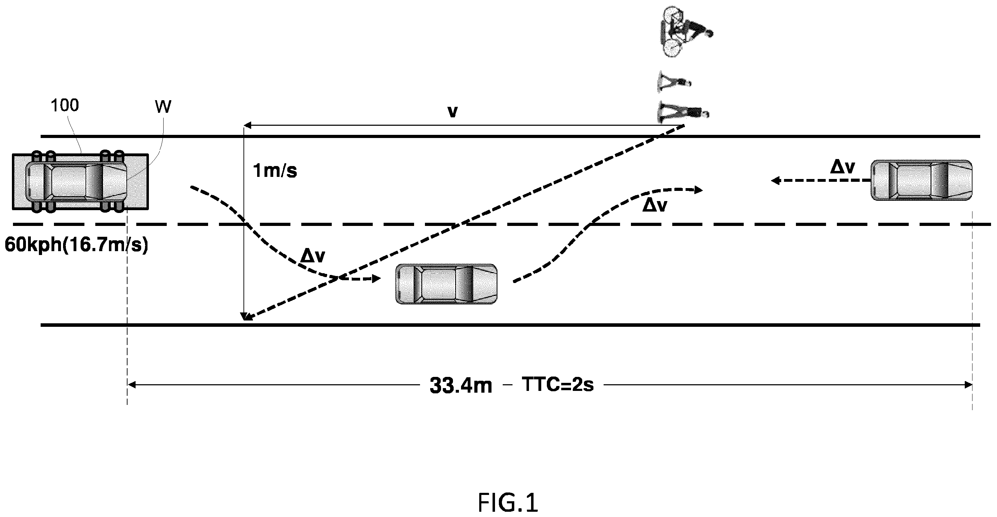

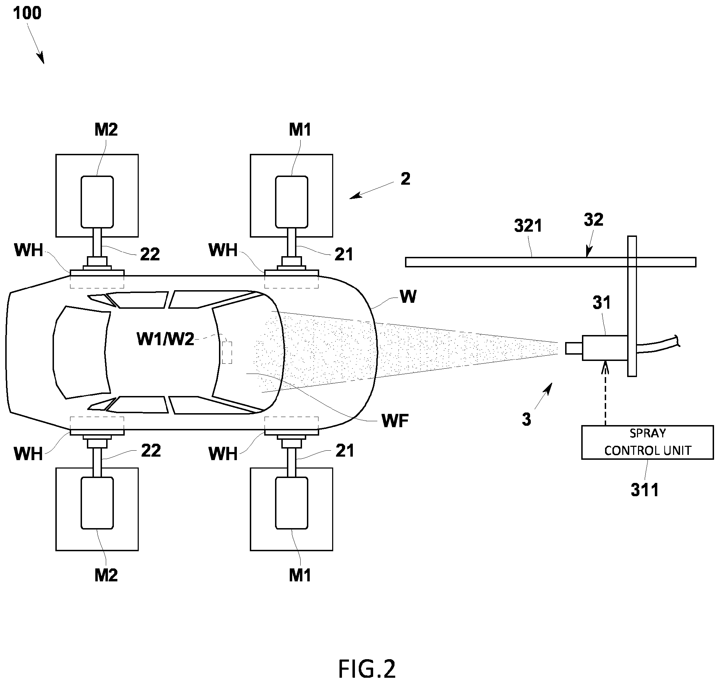

FIGS. 1 and 2 illustrate an example of a scenario of a test-subject-testing method using the test-subject-testing system 100 of the present embodiment. Here, considered is a method of evaluating the control (for example, adaptive cruise control, automatic braking, lane keeping, overtaking, lane change, or emergency avoidance steering, or the like.) of the test subject W by changing the surrounding environment such as the front, rear, side, or the like of the test subject W or inputting a pseudo signal to the sensor of the test subject W while setting the test subject W in the traveling state on the test-subject-testing system 100. Note that, the sensor of the test subject W acquires surrounding information, and examples thereof include a camera, a millimeter wave radar, an infrared sensor, and a LiDAR. Here, a camera W1 or a LiDAR W2 recognizes the front of a vehicle via a windshield WF.

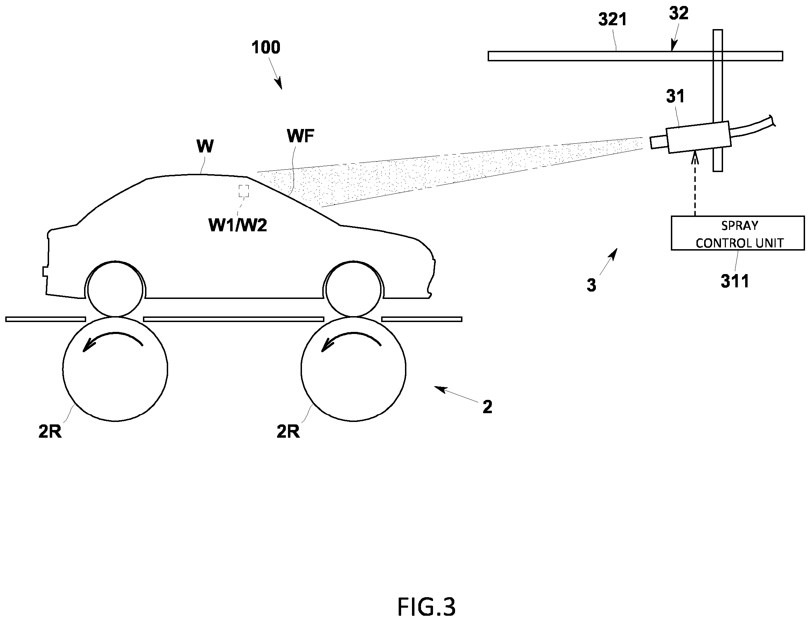

Specifically, as illustrated in FIGS. 2 and 3, the test-subject-testing system 100 of the present embodiment includes a test device 2 on which a test subject W is placed or to which the test subject W is connected, and a spray mechanism 3 that sprays water droplets toward the test subject W.

The test device 2 includes a rotation body (see FIG. 2) to which an axle, a wheel or a traveling wheel of a test subject are connected, or a rotation body 2R (see FIG. 3) on which the traveling wheel of the test subject W is placed. The rotation body on which the traveling wheel of the test subject W is placed may be, for example, a roller of a chassis dynamometer or a free roller that freely rotates. In addition, the rotation body to which the axle, the wheel or the traveling wheel of the test subject W are connected may be, for example, a dynamometer, a motor, or a rotation shaft. In addition, these may be connected to the axle, the wheel or the traveling wheel via a universal joint or the like.

The test device 2 illustrated in FIG. 2 has a configuration in which front wheel side motors M1 are connected to wheels WH or the axle of the right and left front wheels via rotation shafts 21 (front side rotation shafts), and rear wheel side motors M2 are connected to wheels WH or the axle of the right and left rear wheels via rotation shafts 22 (rear rotation shafts). Here, the rotation shaft 21 connected to the wheels WH or the axle of the right and left front wheels can use an expansion and contraction structure such as a spline function having a joint having a floating function such as a constant velocity joint or a universal joint. The rotation shaft 22 connected to the wheel WH or the axle of the right and left rear wheels can also use the expansion and contraction structure such as a spline structure. The test subject W may be placed on a support base via a freewheel hub, or may be fixed in a state of floating from a road surface by a fixing mechanism such as a jack.

As illustrated in FIGS. 2 and 3, the spray mechanism 3 sprays water droplets to the test subject W to recreate a rainfall state during traveling of the test subject.

Specifically, the spray mechanism 3 includes a spray unit 31 that sprays water droplets toward the test subject W from surroundings of the test subject W, and a changing unit 32 that changes spray speed, a position, or an angle of the spray unit 31 according to the vehicle velocity of the test subject W.

The spray unit 31 uses a nozzle, and is configured by a two-fluid nozzle in the present embodiment. A water supply source (not illustrated) for supplying water and a compressed air source (not illustrated) for supplying compressed air are connected to the spray unit 31.

The spray unit 31 can adjust the water volume, the water droplet size, or the spray speed. Here, for example, the water volume, the water droplet size, or the spray speed can be adjusted by adjusting the opening degree of the nozzle, the water volume supplied to the nozzle, the amount of compressed air supplied to the nozzle, or the like under the control of a spray control unit 311 that has the function a part of the changing unit 32. In addition, the spray unit 31 may combine two or more spray units having different spray performances (for example, water volume, water droplet size, spray speed, or the like). Note that, in a case where the water volume, the water droplet size, or the spray speed of the spray unit 31 is adjusted, the control by the spray control unit 311 is not necessarily essential, and the water volume, the water droplet size, or the spray speed may be adjusted manually, or a spray valve 31 to which the water volume, the water droplet size, or the spray speed is fixed may be used.

Furthermore, the spray unit 31 is configured to spray water droplets toward the windshield WF of the test subject W by changing the position or angle by the changing unit 32. Specifically, the spray unit 31 sprays water droplets to a region including a portion of the windshield WF where the camera W1 or the LiDAR W2 is provided.

The changing unit 32 moves the spray unit 31 within a first predetermined range in the vertical direction and/or within a second predetermined range in the front-rear direction. Here, both the first predetermined range and the second predetermined range are set within a range in which water droplets can hit the test subject W (particularly, the windshield of the test subject W). In addition, the changing unit 32 changes the angle of the spray unit 31 within a range in which the water droplets hit the test subject W. As a specific configuration example of the changing unit 32, for example, an attaching rail 321 extending in the vertical direction and/or the front-rear direction is provided in front of the test subject W, and the spray unit 31 is provided movably along the attaching rail 321. In addition, the spray unit 31 is configured such that an attachment angle with respect to the attaching rail 321 can be changed. Here, the changing unit 32 may change only one of the position and the angle of the spray unit 31. Note that, the changing unit 32 may move the spray unit 31 within a third predetermined range in the width direction of the test subject W.

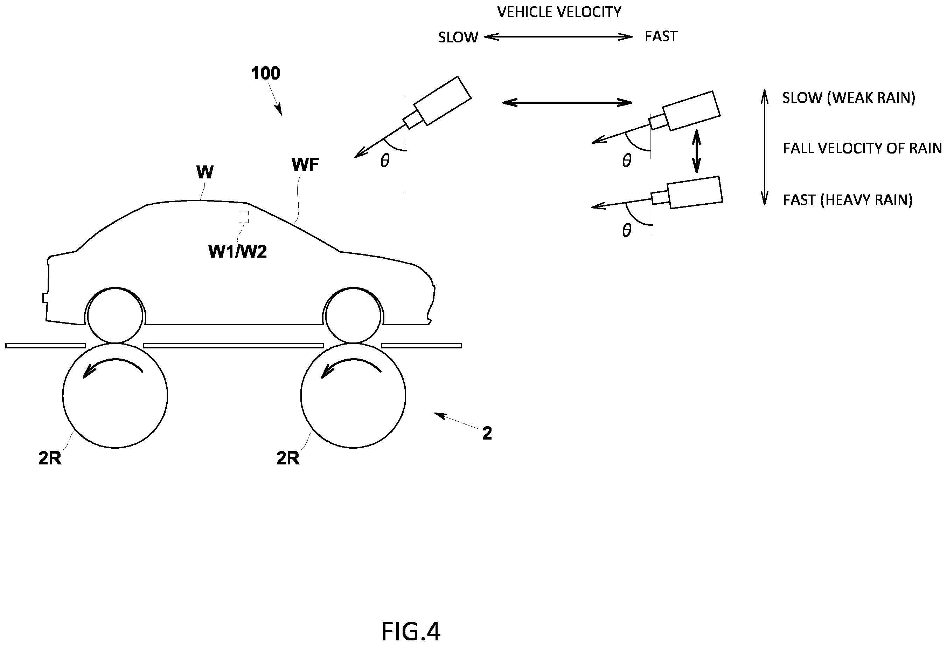

Specifically, as illustrated in FIG. 4, the changing unit 32 may decrease the angle formed by the spray direction of the spray unit 31 and the vertical direction as the fall velocity of the water droplets increases and/or the vehicle velocity decreases. In addition, the changing unit 32 may move the spray unit 31 in a direction away from the test subject W according to the vehicle velocity of the test subject W and/or the fall velocity of the water droplets. Here, when considering the headwind or the tailwind during traveling of the test subject W, the vehicle velocity of the test subject W may be corrected using the wind velocity of the headwind or the tailwind. Note that, it is conceivable that the wind velocity of the headwind is added to the vehicle velocity in the case of the headwind, and the wind velocity of the tailwind is subtracted from the vehicle velocity in the case of the tailwind.

### <Effects of Present Embodiment>

According to the test-subject-testing system 100 of the present embodiment configured as described above, the position or angle of the spray unit 31 that sprays the water droplets is changed according to the vehicle velocity of the test subject W, and the water droplets are sprayed from the surroundings of the test subject W toward the test subject W. Therefore, it is possible to test the test subject W while recreating a precipitation state according to the vehicle velocity of the test subject W.

### <Other Embodiments>

For example, the spray mechanism of the embodiment sprays water droplets to recreate a precipitation state, but frozen water (snow) may be sprayed as water droplets to recreate the precipitation state, or a mixture (sleet) of water droplets and frozen water (snow) may be sprayed to recreate the precipitation state.

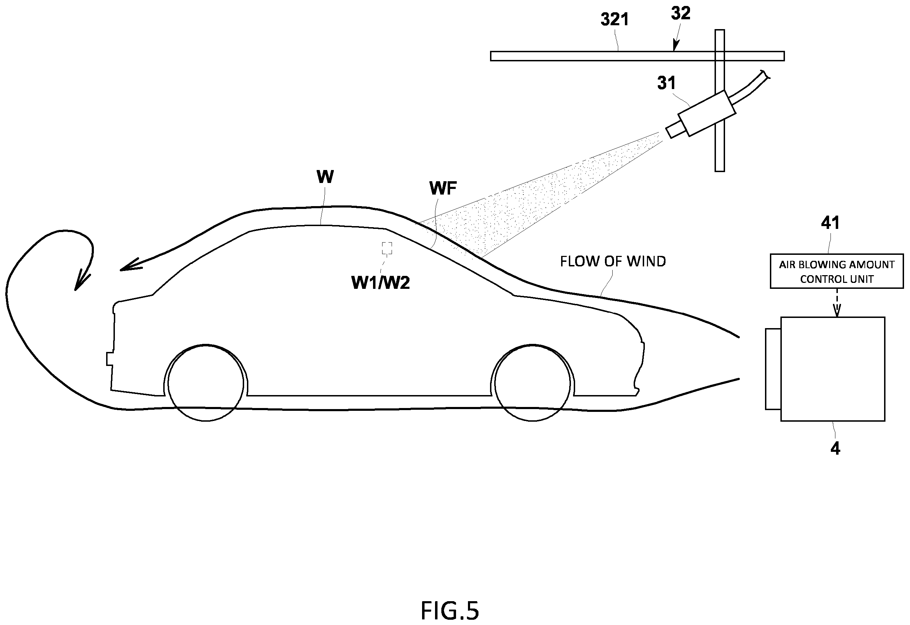

In addition to the configuration of the embodiment, as illustrated in FIG. 5, a blower 4 that blows air toward the test subject W from the front or the side of the test subject W may be further provided. The blower 4 is controlled by an air blowing amount control unit 41 and blows air according to the vehicle velocity of the test subject W. In addition, the air blowing amount control unit 41 may control the blower 4 in consideration of the wind velocity of the headwind or the tailwind during traveling of the test subject W. With this configuration, it is possible to generate a flow of air along a test subject such as a windshield during actual traveling, and to recreate movement of water droplets due to air resistance during traveling.

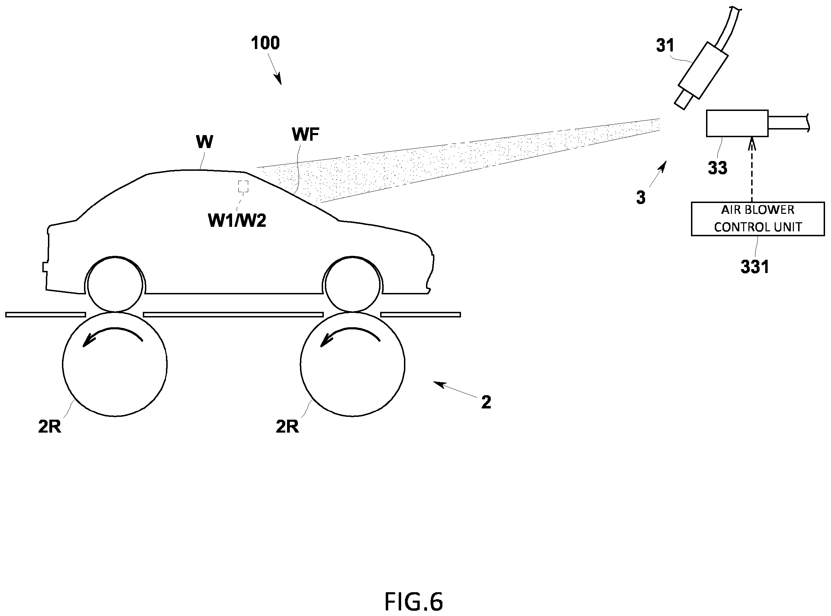

In addition, as illustrated in FIG. 6, the spray mechanism 3 may further include a blower unit 33 that is provided adjacent to the spray unit 31 and blows water droplets sprayed from the spray unit 31. The blower unit 33 is controlled by the air blower control unit 331 to control the air blowing direction and the air blowing amount of the blower unit 33 according to the vehicle velocity of the test subject W. With this configuration, by adjusting the air blowing direction and/or the air blowing amount of the blower unit 33, it is possible to adjust the direction, the spray amount, the size, or the spray speed of the water droplets hitting the test subject W without using the two-fluid nozzle. Note that, the spray unit 31 and the blower unit 33, which are two-fluid nozzles, may be combined.

Furthermore, the changing unit 32 may be configured to automatically change the spray speed, the position, or the angle of the spray unit 31 according to the vehicle velocity of the test subject W. **In** this case, the changing unit 32 includes an actuator for changing the position or the angle of the spray unit 31. Then, the changing unit 32 acquires velocity information from the test subject W or acquires velocity information of the test subject W from a control device of the test device 2 and controls the actuator to automatically change the spray speed, the position, or the angle of the spray unit 31. **In** this configuration, the test-subject-testing system exerts a function of testing the test subject by the test device while changing the spray speed, the position, or the angle of the spray unit that sprays water droplets according to the vehicle velocity of the test subject by a test-subject-testing program stored in a memory of a computer and spraying the water droplets from surroundings of the test subject toward the test subject.

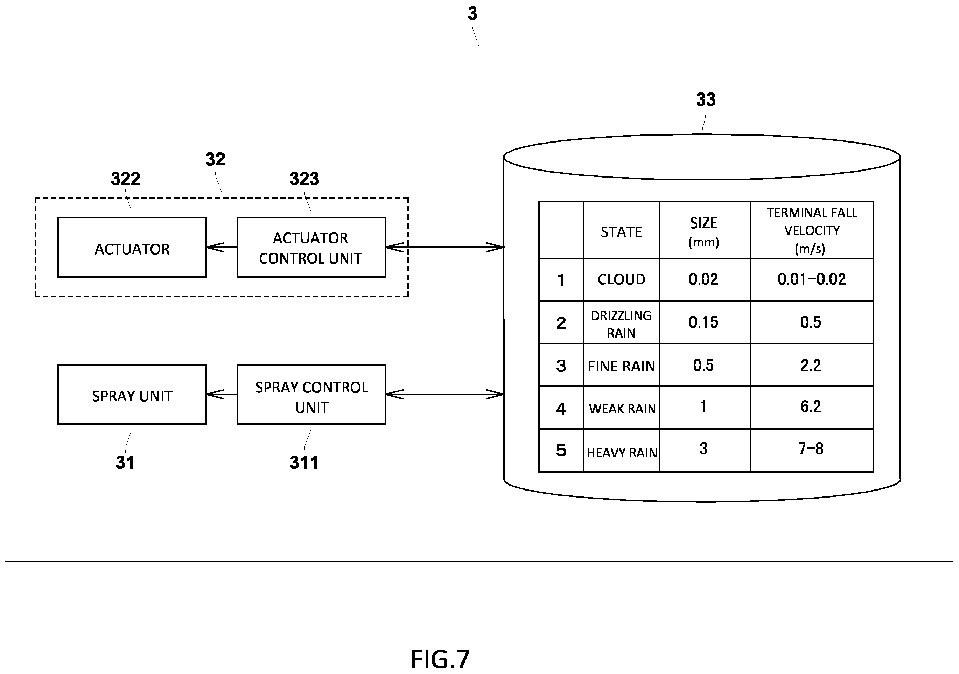

In addition, as illustrated in FIG. 7, the spray mechanism 3 may further include a recording unit 34 that stores a spray condition of the spray unit 31 according to the type of rainfall or snowfall, and the changing unit 32 may read the spray condition from the recording unit 34 according to user's selection to adjust the spray speed, the position, or the angle of the spray unit 31. Here, the changing unit 32 includes an actuator control unit 323 that controls an actuator 322 for changing the position or the angle of the spray unit 31. In addition, the spray control unit 311 that controls the spray unit 31 may read the spray condition from the recording unit 34 according to user's selection, and adjust the water volume, the water droplet size, or the spray speed of the spray unit 31.

The test device of the embodiment physically causes the test subject W to perform simulation traveling. However, the test device may be a computer such as a simulator that sets an automatic driving system or an advanced driving support system of the test subject W to be in an operation state by inputting a simulation signal into the test subject W.

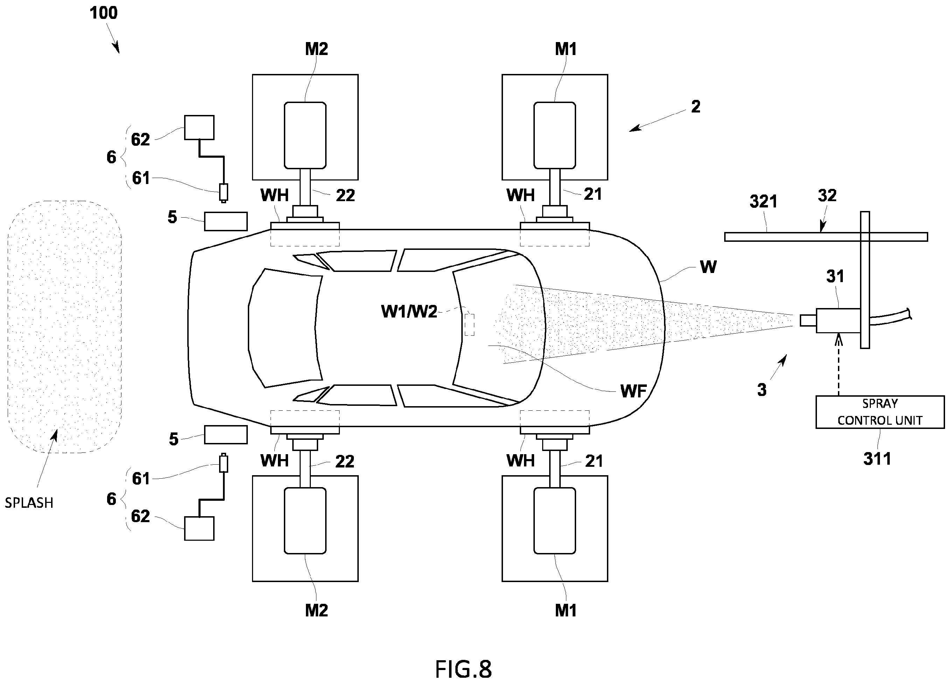

In addition, as illustrated in FIG. 8, the test-subject-testing system may have a configuration of generating a splash from a traveling wheel of the own vehicle. That is, the test-subject-testing system 100 includes a water supply unit 6 that supplies water to the traveling wheel of the test subject W or a simulated rotation body 5 that is disposed around the traveling wheel and simulates the traveling wheel to generate the splash from the traveling wheel or the simulated rotation body. The water supply unit 6 includes a nozzle 61 and a water supply source 62 that supplies water to the nozzle 61. When water is supplied to the traveling wheel, water may be supplied to the left and right rear wheels, or water may be supplied to the left and right front wheels. **In** addition, the simulated rotation body 5 may be provided around each of the left and right rear wheels, or may be provided around each of the left and right front wheels. Note that, in the drawing, an example is illustrated in which the simulated rotation body 5 is provided around the left and right rear wheels, and the water supply unit 6 supplies water to the simulated rotation body 5. These configurations may or may not be combined with the embodiment. Note that, a water supply unit 6 may supply frozen water (snow) or a mixture (sleet) of liquid water and frozen water (snow) in addition to the liquid water.

**In** addition, various modifications and combinations of the embodiments may be made without departing from the gist of the present invention.

### Industrial Applicability

According to the present invention, it is possible to test a test subject while recreating rainfall or snowfall by spraying water droplets according to the vehicle velocity of the test subject.

### Reference Signs List

- 100: test-subject-testing system
- W: test subject
- 2: test device
- 31: spray unit
- 32: changing unit
- 33: blower unit
- 34: recording unit
- 35: control unit
- 4: blower

## Claims

1. A test-subj ect-testing system that tests a test subject that is a vehicle or a part thereof, the test-subject-testing system comprising:
a test device on which the test subject is placed or to which the test subject is connected;
a spray unit that sprays water droplets from surroundings of the test subject toward the test subject; and
a changing unit that changes spray speed, a position, or an angle of the spray unit according to vehicle velocity of the test subject.

2. The test-subject-testing system according to claim 1, wherein the changing unit moves the spray unit within a predetermined range in a vertical direction and/or a front-rear direction.

3. The test-subject-testing system according to claim 1 or 2, wherein the changing unit changes spray speed, a position, or an angle of the spray unit within a range in which the water droplets hit the test subject.

4. The test-subject-testing system according to any one of claims 1 to 3, wherein the changing unit decreases an angle formed by a spray direction of the spray unit and a vertical direction as fall velocity of the water droplets increases and/or vehicle velocity of the test subject decreases.

5. The test-subject-testing system according to any one of claims 1 to 4, wherein the changing unit moves the spray unit in a direction away from the test subject according to vehicle velocity of the test subject and/or fall velocity of the water droplets.

6. The test-subject-testing system according to any one of claims 1 to 5, wherein the spray unit is capable of adjusting water volume, water droplet size, or spray speed.

7. The test-subject-testing system according to any one of claims 1 to 6, further comprising a recording unit that stores a spray condition of the spray unit according to a type of rainfall or snowfall,
wherein the changing unit reads the spray condition from the recording unit according to user's selection, and adjusts spray speed, a position, or an angle of the spray unit.

8. The test-subject-testing system according to any one of claims 1 to 7, wherein the spray unit sprays water droplets toward a windshield of the test subject by changing a position or an angle by the changing unit.

9. The test-subject-testing system according to any one of claims 1 to 8, wherein the test subject is an automatic driving vehicle, a vehicle having an advanced driving support system, or a part thereof, and is provided with a camera or a LiDAR that recognizes a front of a vehicle via a windshield.

10. The test-subject-testing system according to any one of claims 1 to 9, further comprising a blower that blows air toward the test subject from a front or a side of the test subject.

11. The test-subject-testing system according to any one of claims 1 to 10, wherein the test device causes the test subject to perform simulation traveling or sets an automatic driving system or an advanced driving support system of the test subject to be in an operation state.

12. The test-subject-testing system according to any one of claims 1 to 11, comprising a water supply unit that supplies water to a traveling wheel of the test subject or a simulated rotation body that is disposed around the traveling wheel and simulates the traveling wheel to generate a splash from the traveling wheel or the simulated rotation body.

13. A test-subject-testing method for testing a test subject that is a vehicle or a part thereof, the test-subject-testing method comprising:
changing spray speed, a position, or an angle of a spray unit that sprays water droplets according to vehicle velocity of the test subject; and
testing the test subject by a test device while spraying water droplets from surroundings of the test subject toward the test subject.

14. A test-subj ect-testing program for testing a test subject that is a vehicle or a part thereof, the test-subject-testing program comprising:
changing spray speed, a position, or an angle of a spray unit that sprays water droplets according to vehicle velocity of the test subject; and
testing the test subject by a test device while spraying water droplets from surroundings of the test subject toward the test subject.
